# EUROPEAN PATENT APPLICATION

(11) **EP 4 765 600 A1**
(43) Date of publication of application: **24.06.2026**
(21) Application number: 25220572.9
(22) Date of filing: 03.12.2025
(51) Int. Cl.: H02M 1/00, H02M 3/07, H02M 3/158, H02M 7/483

(54) **POWER CONVERTER**

(30) Priority: 19.12.2024 EP 24307210
(71) Applicant: Analog Devices International Unlimited Company, Co. Limerick (IE)
(72) Inventor: Olivier, Bonte, Limerick (IE)
(74) Representative: Horler, Philip John

(57) **Abstract**

The present disclosure relates to a DC-DC power converter and method of operation. The converter comprises a first converter circuit for controlling a first output current and a second converter circuit for controlling a second output current. The first converter comprises a first plurality of switches coupled to a first terminal of the DC-DC power converter and a first inductive impedance coupled to the first plurality of switches and a second terminal of the DC-DC power converter. The second converter circuit comprises a second plurality of switches coupled to the first terminal of the DC-DC power converter and a second inductive impedance coupled to the second plurality of switches the second terminal of the DC-DC power converter. The DC-DC power converter also comprises first and second capacitors, each cross-coupled between the first converter circuit and the second converter circuit.

## Description

### Technical field

The present disclosure relates to electrical power converters, particularly DC-DC converters.

### Background

DC-DC converters may be used for many purposes, where a regulated supply of DC power is desired. For example, they may be used in electronic devices (such as mobile electronic devices, for example smart phones, tablet computers, laptop computers, etc) to convert input DC power, which may be variable in size depending on the source of the DC power, to a controlled DC power level for charging a battery and/or powering electronic circuits within the device.

Increasingly, there is a desire to supply more power at the output of the converter. However, increasing the power capabilities of circuits typically involves compromise, such as requiring larger and/or more expensive components, requiring more complex control, requiring higher precision components, etc

### Drawings

Aspects of the disclosure are described with reference to the following drawings, in which:
Figure 1A shows an example two-level, single phase DC-DC converter;
Figure 1B shows an example of a two-level, two phase DC-DC converter;
Figure 2A shows an example three-level, single phase DC-DC converter;
Figure 2B shows an example three-level, two-phase DC-DC converter;
Figure 3 shows a further example three-level, two-phase DC-DC converter topology;
Figure 4 shows an example DC-DC converter in accordance with an aspect of this disclosure;
Figures 5A to 5D show first, second, third and fourth modes of operation of the DC-DC converter of Figure 4;
Figures 6A-6D show a sequence of modes of operation of the DC-DC converter of Figure 4 when Vout/Vin>0.5;
Figures 7A-7D show a sequence of modes of operation of the DC-DC converter of Figure 4 when Vout/Vin<0.5; and
Figure 8 shows a representation of an example method of controlling the DC-DC power converter of Figure 4.

### Summary

In a first aspect of the disclosure, there is provided a DC-DC power converter comprising: a first converter circuit for controlling a first current, the first converter circuit comprising: a first plurality of switches coupled to a first terminal of the DC-DC power converter; and a first inductive impedance through which the first current flows, wherein the first inductive impedance comprises a first end coupled to the first plurality of switches and a second end coupled to a second terminal of the DC-DC power converter; a second converter circuit for controlling a second current, the second converter circuit comprising: a second plurality of switches coupled to the first terminal of the DC-DC power converter; and a second inductive impedance comprising a first end coupled to the second plurality of switches and a second end coupled to the second terminal; a first capacitor comprising a first terminal coupled to the first converter circuit and a second terminal coupled to the second converter circuit; and a second capacitor comprising a first terminal coupled to the second converter circuit and a second terminal coupled to the first converter circuit.

In a second aspect of the disclosure, there is provided a method of controlling a DC-DC power converter, the method comprising: controlling an output power of the DC-DC power converter by controlling a first plurality of switches and a second plurality of switches of the DC-DC power converter so as to sequentially operate in a plurality of different modes, wherein the plurality of different modes comprises: a first mode wherein a first current flows between a reference terminal of the DC-DC power converter and an output terminal of the DC-DC power converter, through a first inductive impedance and a first capacitor of the DC-DC power converter, and a second current flows between the reference terminal and the output terminal, through a second inductive impedance and a second capacitor; and a second mode wherein the first current flows between an input terminal of the DC-DC power converter and the output terminal, through the first inductive impedance and the second capacitor, and the second current flows between the input terminal and the output terminal, through the second inductive impedance and the first capacitor, wherein an output current of the DC-DC power converter comprises the first current and the second current.

In a third aspect of the disclosure, there is provided a circuit comprising: a first converter circuit coupled to a DC power input terminal and a DC power output terminal, wherein the first converter circuit is for controlling a first current output at the DC power output terminal; a second converter circuit coupled to the DC power input terminal and the DC power output terminal, wherein the second converter circuit is for controlling a second current output at the DC power output terminal; a first capacitor cross coupled between the first converter circuit and the second converter circuit; and a second capacitor cross coupled between the first converter circuit and the second converter circuit.

### Detailed Description

The present disclosure relates to a novel DC-DC power converter designed to address the growing demand for higher power output in electronic devices, such as for mobile devices. The DC-DC power converter is a three-level, two-phase DC-DC converter that achieves increased power capabilities without significantly increasing size, cost and complexity, by incorporating cross-coupled capacitors and a unique control mechanism.

The use of cross-coupled capacitors results in self-balancing of currents and voltages, eliminating the need for precise matching of inductors and reducing the overall size and cost of the converter. It also reduces the complexity of the control circuit and minimises the need for additional current and voltage sensors The three-level design may reduce inductor ripple current and allows for the use of FETs with lower power ratings, further reducing the component cost and size required for the converter. The converter is configured for dynamic operation in multiple modes to achieve a desired output power, making it adaptable to various input and output conditions.

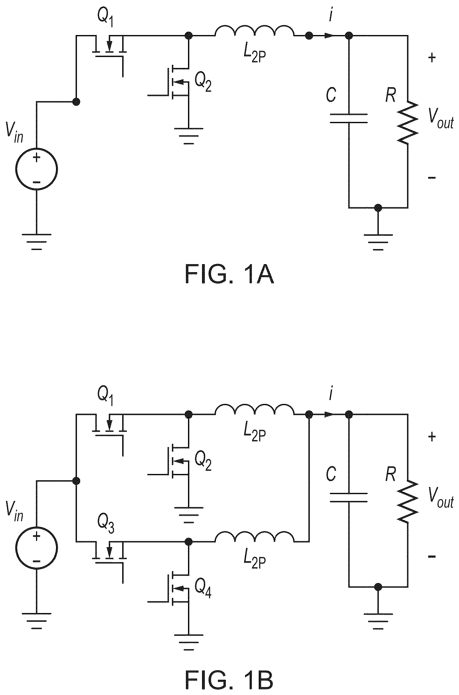

Figure 1A shows an example two-level, single phase DC-DC converter. It is described as two-level because the switch node has two voltage levels - Vin and ground. It is described as single phase because it supplies a single current component i, from the single inductor L_{2P}, to the output node. The skilled person will understand that FETs Q1 and Q2 can be controlled to turn on and turn off in order to regulate the voltage Vout and the current i at a desired level. A load, such as a battery, may be connected to the output and supplied with the regulated power, and is represented in the drawing as load R.

Increasingly, there is a desire to supply more power at the output of the converter. The amount of current, and therefore power, that can be supplied is limited by the saturation current of the inductor L_{2P}. In order to increase the saturation current, the inductor L_{2P} could be made larger. However, space constraints, particularly for mobile electronics devices, may make this very difficult and/or costly. One solution is to introduce additional phases of current.

Figure 1B shows an example of a two-level, two phase DC-DC converter. It can be seen that the FETs and inductor of Figure 1A have essentially been duplicated, so that two currents (i.e., two phases) are supplied by the two inductors L_{2P} to the output, thereby increasing the output current i. Since each inductor can be very small and low cost (for example, low profile inductors), this may help to achieve a significant increase in output power without significantly increasing cost or the space the circuit takes up.

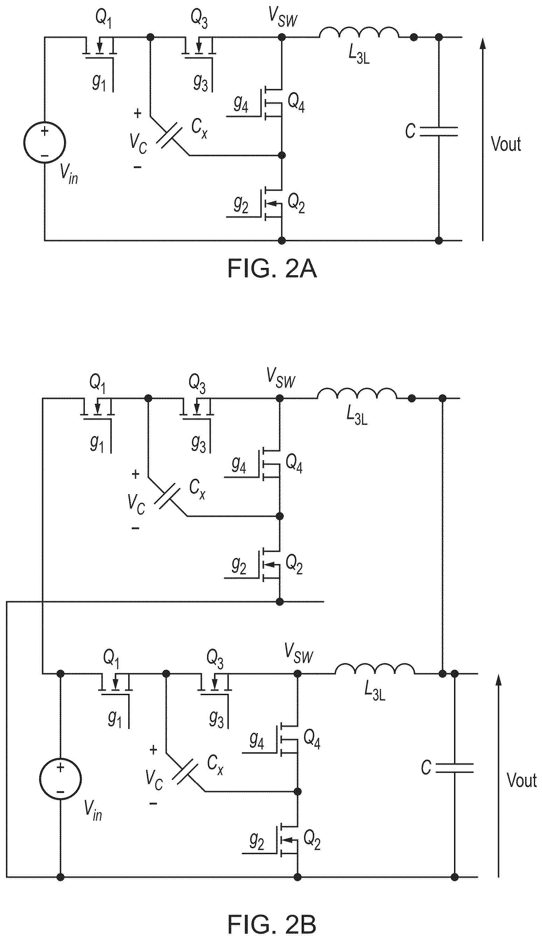

Figure 2A shows an example three-level, single phase DC-DC converter. Like Figure 1A, there is a single inductor L_{3L} that supplies a single current component to the output. As a result, this is a single-phase design. The circuit of Figure 2A includes a capacitor Cx, sometimes referred to as a fly capacitor. The capacitor Cx is arranged to reduce the maximum voltage that may be present across any of the FETs Q1-Q4 to Vin/2 (in contrast to two-level topologies where the maximum voltage across any of the FETs is Vin). Consequently, it is described as three-level because the switching node has three possible voltage levels - Vin, Vin/2 and ground.

Three-level topologies have some benefits over two-level topologies. One benefit is a reduced inductor ripple current. Another benefit is that because the maximum voltage across each FET is lowered by the fly capacitor Cx, FETs with lower power ratings may be used, which can reduce size and cost.

Figure 2B shows an example three-level, two-phase DC-DC converter. This topology is similar to Figure 2A, but essentially duplicates the FETs Q1 to Q4, the fly capacitor Cx, and the inductor L_{3L}. This enables two-phases of current to be delivered to the output, thereby increasing the power output of the circuit.

Whilst two/dual phase converters are very useful for delivering higher power at relatively low incremental cost and size, they may have some drawbacks. In the topologies of Figures 1B and 2B, it may be important to balance the current supplied by each phase. This typically requires a current sensor to be present at both phases/inductors, which increases costs and size of the circuit. Also, it is likely that the need to balance both phase currents will increase control complexity, which may increase control circuit silicon area and/or complexity. Furthermore, it may be necessary for the two inductors to be well matched, which might require more precisely made inductors, which again may increase costs.

Furthermore, in the arrangement of Figure 2B, it may be necessary to monitor the voltage Vc of both fly capacitors Cx as part of control circuit operation to regulate the voltage Vc to not exceed Vin/2. Again, this additional measurement of both capacitor voltages Vc and more complex control to balance both capacitor voltages may increase costs and/or size if the converter.

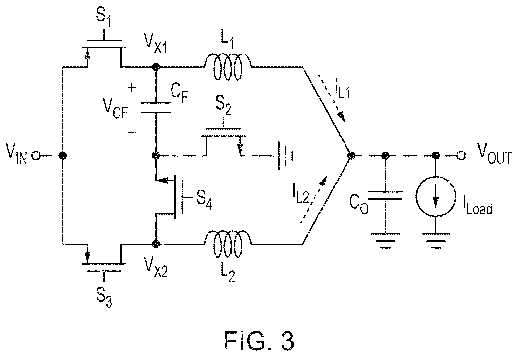

Figure 3 shows a further example three-level, two-phase DC-DC converter topology. In this topology, the capacitor voltage V_{CF} is not regulated, which results in FET voltages sometimes exceeding Vin/2, thereby necessitating the use of FETs with higher power rating. This diminishes one of the primary benefits of three-level converters. Furthermore, the effective balancing of the two current phases may be degraded at large Vin/Vout ratios (eg, when Vin is much larger than Vout), meaning that phase balancing is not very good over a wide Vin/Vout range.

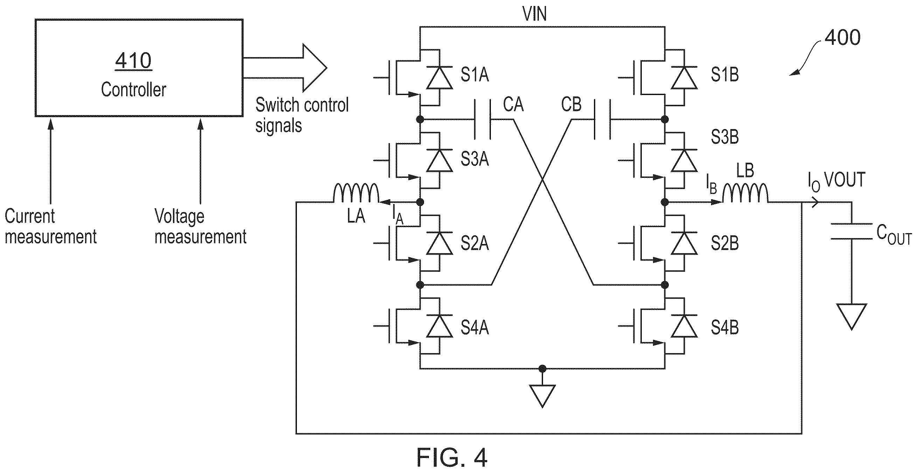

Figure 4 shows an example DC-DC converter 400 in accordance with an aspect of this disclosure. The DC-DC converter 400 comprises a first converter circuit comprising a first plurality of switches (in this example, four switches) S1A, S2A, S3A and S4A, and a first inductive impedance (in this example, an inductor, although any suitable alternative impedance component having inductance may be used) LA. The first plurality of switches are coupled to a first terminal VIN of the converter (specifically S1A is coupled to VIN), and to a first end of the inductive impedance LA (specifically S2A and S3A are coupled to LA). A second end of the inductive impedance LA is coupled to a second terminal VOUT of the converter. During operation of the DC-DC converter 400, a first current I_{A} flows through the first inductive impedance LA.

The DC-DC converter 400 also comprises a second converter circuit comprising a second plurality of switches (in this example, four switches) S1B, S2B, S3B and S4B, and a second inductive impedance (in this example, an inductor, although any suitable alternative impedance component having inductance may be used) LB. The second plurality of switches are coupled to the first terminal VIN of the converter (specifically S1B is coupled to VIN), and to a first end of the second inductive impedance LB (specifically S2B and S3B are coupled to LB). A second end of the inductive impedance LB is coupled to a second terminal VOUT of the converter. During operation of the DC-DC converter 400, a second current I_{B} flows through the second inductive impedance LB.

The DC-DC converter 400 also comprises cross-coupled capacitors (eg, fly capacitors) CA and CB. These capacitors are cross-coupled in that each of them is coupled between the first converter circuit and the second converter circuit. In particular, the first capacitor CA comprises a first terminal coupled to the first converter circuit (specifically S1A and S3A in this example) and a second terminal coupled to the second converter circuit (specifically S2B and S4B in this example), and the second capacitor CB comprises a first terminal coupled to the first converter circuit (specifically S2A and S4A in this example) and a second terminal coupled to the second converter circuit (specifically S1B and S3B in this example). As will be appreciated from the discussion below, by cross-coupling the fly capacitors in this way, the DC-DC converter 400 circuit may be controlled so that each capacitor can at different times be part of both I_{A} and I_{B} carrying circuits, thereby enabling self-balancing of the circuit, even in the case that inductive impedances LA and LB are not matched. In particular, it is possible to control the converter so that CA is charged by one of IA or IB flowing through LA or LB respectively, and discharged by the other of IA or IB flowing through LA or LB respectively. Likewise, it is possible to control the converter so that CB is charged by one of IB or IA flowing through LB or LA respectively, and discharged by the other of IB or IA flowing through LB or LA respectively. Consequently, it may be possible to achieve self-regulation to the same average current at I_{A} and I_{B}, without requiring both IA and IB to be measured. Furthermore, it may be possible to achieve self-regulation of capacitor voltages (i.e., the voltages across CA and CB), without requiring the voltages across both CA and CB to be measured. Thus, a well balanced, two-phase, three-level DC-DC converter 400 may be achieved at lower cost and smaller size than previous topologies.

The DC-DC converter 400 may also comprise a controller 410 (or the controller 410 may be seen as a separate unit/device to the DC-DC converter) for controlling the operation of the converter. The controller 410 may be coupled to the first converter circuit and the second converter circuit so as to control the switches (for example, it may output eight switch control signals, one for each of the gates of the switches S1AS4A and S1B-S4B, so as to control whether each switch is open, "off", or closed, "on"). The controller 410 may also be configured to receive a current measurement signal, which may relate to a measurement of any one or more of: I_{A}, I_{B} and/or I_{O}. The current measurement signal may be used in the course of controlling the operation of the converter. Optionally, the controller 410 may also be configured to receive a voltage measurement signal, which may relate to a measurement of a voltage across CA (i.e., a measure of the voltage difference between the two terminals of CA) and/or a voltage across CB (i.e., a measure of the voltage difference between the two terminals of CB).

The DC-DC converter 400 may be controlled to operate in a plurality of different modes, in order to achieve a desired voltage VOUT, by controlling I_{O} to a target current I_{T}.

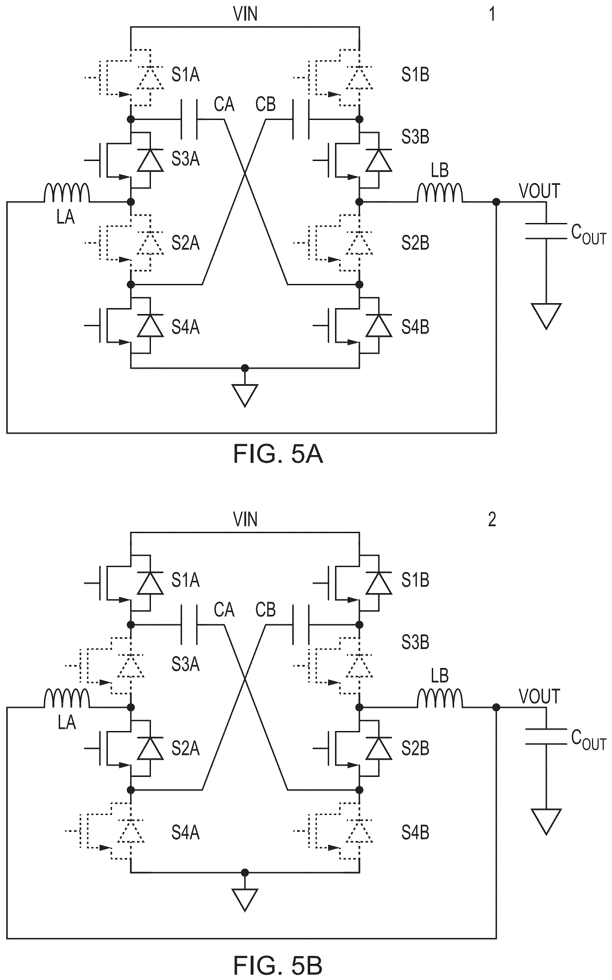

Figure 5A shows a first mode of the plurality of different modes. In the first mode, switches S1A, S2A, S1B and S2B are controlled to be open (i.e., the gate voltages of those FETs are controlled by the controller 410 so as to turn them off). Switches S3A, S4A, S3B and S4B are controlled to be closed (i.e., the gate voltages of those FETs are controlled by the controller 410 so as to turn them on). As can be seen, in this mode, the first end of inductive impedance LA is coupled to a reference terminal (in this example, ground) via CA, and the first end of inductive impedance LB is coupled to a reference terminal (in this example, ground) via CB. As a result, in this mode, phase current I_{A} flows through both LA and CA, and phase current I_{B} flows through both LB and CB.

Figure 5B shows a second mode of the plurality of different modes. In the second mode, switches S1A, S2A, S1B and S2B are controlled to be closed (i.e., the gate voltages of those FETs are controlled by the controller 410 so as to turn them on). Switches S3A, S4A, S3B and S4B are controlled to be open (i.e., the gate voltages of those FETs are controlled by the controller 410 so as to turn them off). As can be seen, in this arrangement, the first end of inductive impedance LA is coupled to the first terminal VIN via CB, and the first end of inductive impedance LB is coupled to the first terminal VIN via CA. As a result, in this mode, phase current I_{A} flows through both LA and CB, and phase current I_{B} flows through both LB and CA. These two modes of operation may enable self-balancing of the two current phases and the two capacitor voltages.

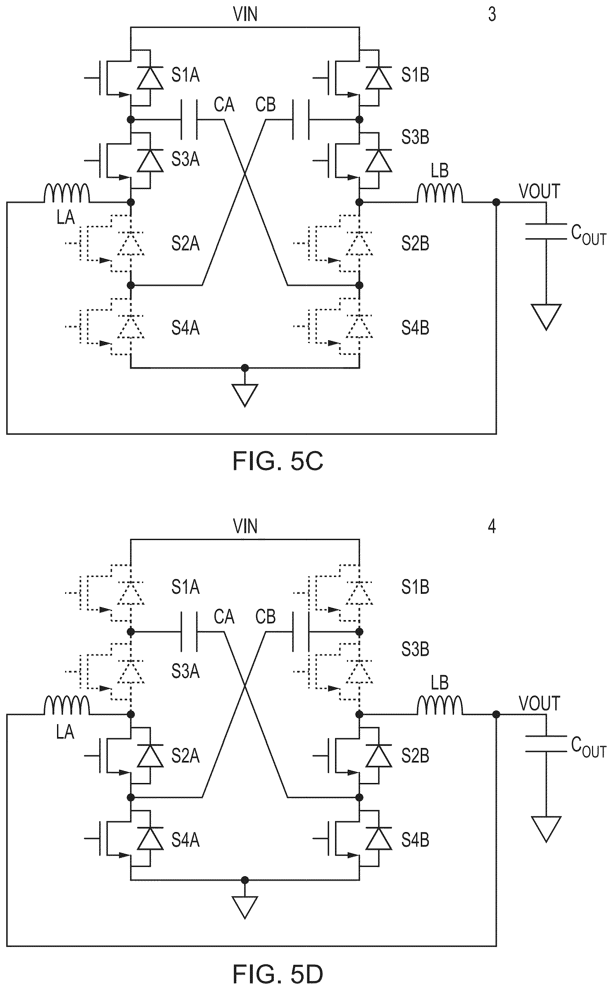

Figure 5C shows a third mode of the plurality of different modes. In the third mode, switches S1A, S3A, S1B and S3B are controlled to be closed (i.e., the gate voltages of those FETs are controlled by the controller 410 so as to turn them on). Switches S2A, S4A, S2B and S4B are controlled to be open (i.e., the gate voltages of those FETs are controlled by the controller 410 so as to turn them off). As can be seen, in this arrangement, the first end of inductive impedance LA and the first end of inductive impedance LB are both coupled to the first input terminal VIN.

Figure 5D shows a fourth mode of the plurality of different modes. In the fourth mode, switches S1A, S3A, S1B and S3B are controlled to be open (i.e., the gate voltages of those FETs are controlled by the controller 410 so as to turn them off). Switches S2A, S4A, S2B and S4B are controlled to be closed (i.e., the gate voltages of those FETs are controlled by the controller 410 so as to turn them on). As can be seen, in this arrangement, the first end of inductive impedance LA and the first end of inductive impedance LB are both coupled to the reference terminal (in this example, ground).

In order to control the converter to achieve a desired/target output current I_{T}, and therefore also a desired output voltage, the converter may be controlled to sequentially operate in two or more of these modes. The particular sequence of modes to use may be determined in a number of different ways, for example based at least on measurements of Vin and Vout. In particular, the relative size of Vin and Vout may dictate whether or not each phase current I_{A} and I_{B}, and therefore also the total output current I_{O}, increases or decreases during each mode of operation. In more detail, during modes 1 and 2, the fly capacitors CA and CB mean that the voltage at the first end of the inductive elements should equal VIN/2 (although in practice the voltage may fluctuate a small amount, for example 1, 2, 3 or 5%, depending on the level of control and regulation). This means that if VIN is less than twice the size of VOUT (i.e., Vout/Vin>0.5), currents I_{A}, I_{B} and I_{O} should decrease during modes 1 and 2. If VIN is more than twice the size of VOUT (i.e., Vout/Vin<0.5), currents I_{A}, I_{B} and I_{O} should increase during modes 1 and 2.

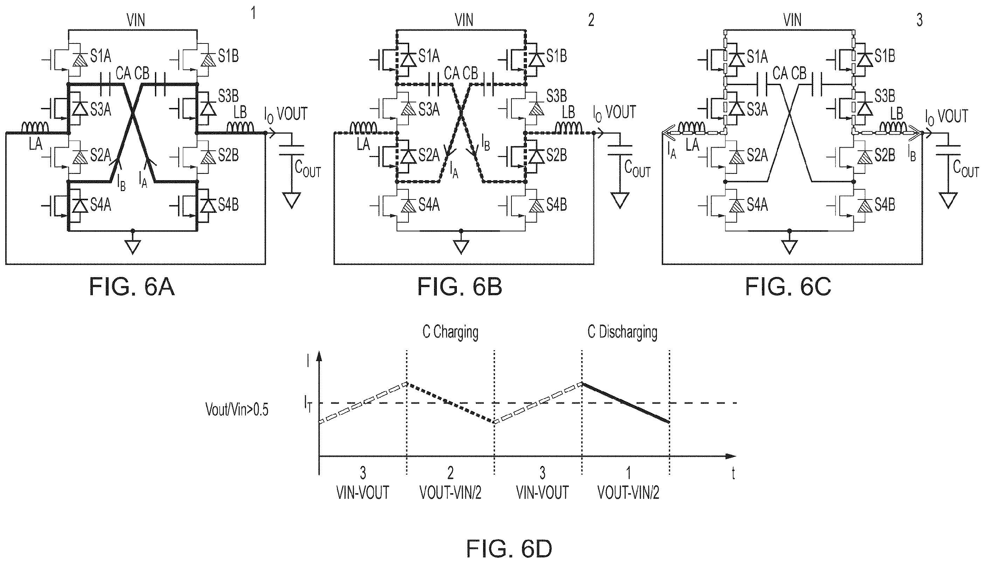

Figures 6A-6D show the sequence of modes that may be used when Vout/Vin>0.5. In this voltage condition, the converter may be controlled to operate in a sequence of modes that comprises the first, second and third modes. The output current IO at the second terminal (VOUT) is equal to I_{A}+I_{B}.

Figure 6A shows the current paths for I_{A} and I_{B} during the first mode. Current I_{A} flows from the reference terminal (ground), through CA, then through LA to the output terminal VOUT. Current I_{B} flows from the reference terminal (ground), through CB, then through LB to the output terminal VOUT.

Figure 6B shows the current paths for I_{A} and I_{B} during the second mode. Current I_{A} flows from the first terminal VIN, through CB, then through LA to the output terminal VOUT. Current I_{B} flows from the first terminal VIN, through CA, then through LB to the output terminal VOUT.

Figure 6C shows the current paths for I_{A} and I_{B} during the third mode. Current I_{A} flows from the first terminal VIN, through LA to the output terminal VOUT. Current I_{B} flows from the first terminal VIN, through LB to the output terminal VOUT.

Figure 6D shows the sequence of modes in which the converter may be controlled to operate. The sequence may be arranged as: mode 3, then mode 2, then mode 3, then mode 1, then mode 3, then mode 2, etc, etc. The graphic shows how current, for example I_{A}, or I_{B}, or I_{O}, may change over time, as the converter is controlled to transition from one mode to the next. During mode 3, the voltage across each of LA and LB is equal to VIN-VOUT, which results in an increasing current. When it is determined that the measured current (for example, I_{A}, or I_{B}, or I_{O}) exceeds the target amount I_{T} by more than a pre-determined margin (for example, 1%, 2%, 5%, 10%, etc), the converter may be controlled to move to the next mode in the sequence, which in this example is mode 2. During mode 2, the capacitor CA is being charged by I_{B} and capacitor CB is being charged by I_{A}. The voltage across each of LA and LB is equal to VOUT-VIN/2, which results in a decreasing current, because Vout/Vin>0.5. When it is determined that the measured current is below the target amount I_{T} by more than a pre-determined margin (for example, 1%, 2%, 5%, 10%, etc), the converter may be controlled to return to mode 3.

After the sequence mode 3 - mode 2 - mode 3, the converter may be controlled to operate in mode 1. During mode 1, the capacitor CA discharges I_{A} and capacitor CB discharges I_{B}. Thus, it can be seen that mode 1 results in CA discharging one current (eg I_{A}) and CB discharging the other current (eg I_{B}) and mode 2 results in CB being charged by one current (eg I_{A}) and CA being charged by the other current (eg I_{B}), thereby achieving self-balancing of the currents and of the capacitor voltages, even when the inductive impedances LA and LB are not balanced. During mode 1, the voltage across each of LA and LB is equal to VOUT-VIN/2, which results in a decreasing current, because Vout/Vin>0.5. When it is determined that the measured current is below the target amount I_{T} by more than a pre-determined margin (for example, 1%, 2%, 5%, 10%, etc), the converter may be controlled to return to mode 3. Thus, it can be seen that the current can be controlled to a desired level, with an amount of ripple about that desired level.

Since I_{A} and I_{B} are self-balanced, this control may be achieved by measuring only one of I_{A}, I_{B} and I_{O}. Thus, the burden of current measurement, and complexity of control, may be reduced compared with prior art two-phase, three level converters. The measure of current used may be any one or more of instantaneous current, average current (eg, RMS or mean current), peak/maximum current, or trough/minimum current, etc. Any suitable current measurement means, such as a shunt and ADC, may be used and is not represented in the figures for the sake of simplicity.

Optionally, the voltage across one or more of CA and CB may also be monitored and may be used to determine the required mode sequence. For example, if the monitored capacitor voltage is deemed to be too high (for example, it is greater than VIN/2), the converter may be controlled to alternate between mode 3 and mode 1, until the capacitor has discharged sufficiently to reduce the capacitor voltage to VIN/2 or less, at which point it may return to the sequence of mode 3 - mode 2 - mode 3 - mode 1 - mode 3 - mode 2 - mode 3 - mode 1- mode 3, etc. Likewise, if the monitored capacitor voltage is deemed to be too low (for example, it is much less than VIN/2), the converter may be controlled to alternate between mode 3 and mode 2, until the capacitor has charged sufficiently to increase the capacitor voltage to close to VIN/2, at which point it may return to the sequence of mode 3 - mode 2 - mode 3 - mode 1 - mode 3 - mode 2 - mode 3 - mode 1- mode 3, etc. In one example, the next mode to go to at the end of mode 3 may be determined by comparing the capacitor voltage to VIN/2. If it is greater than VIN/2, the next mode may be mode 1, and if it is less than VIN/2, the next mode may be mode 2. Again, because of self-balancing, monitoring the voltage on a single capacitor should be sufficient to achieve this control. The capacitor voltage may be measured using any suitable means and is not represented in the figures for the sake of simplicity.

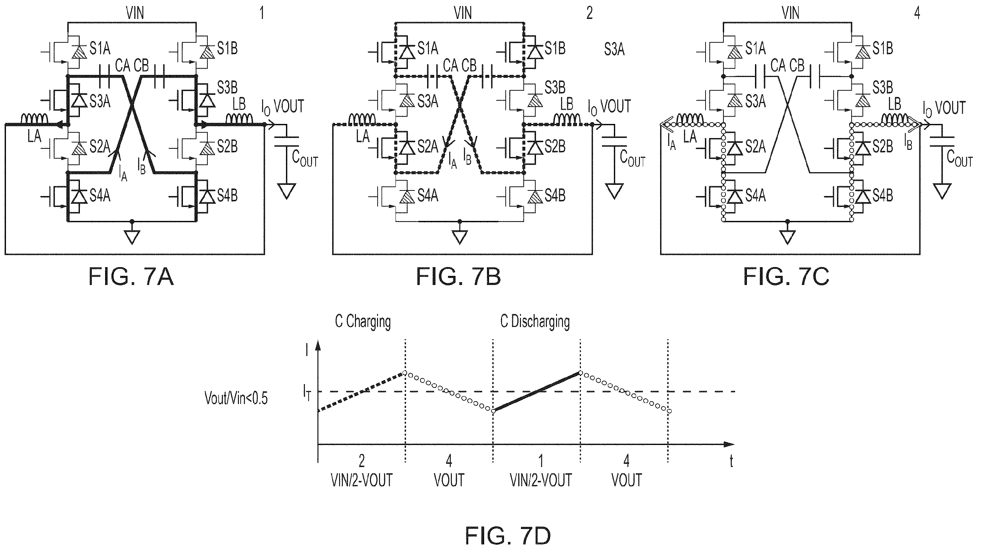

Figures 7A-7D show the sequence of modes that may be used when Vout/Vin<0.5. In this voltage condition, the converter may be controlled to operate in a sequence of modes that comprises the first, second and fourth modes.

Figure 7A shows the current paths for I_{A} and I_{B} during the first mode, and is the same as Figure 6A.

Figure 7B shows the current paths for I_{A} and I_{B} during the second mode, and is the same as Figure 6B.

Figure 7C shows the current paths for I_{A} and I_{B} during the fourth mode. Current I_{A} flows from the reference terminal (in this example, ground) through LA to the output terminal VOUT. Current I_{B} flows from the reference terminal, through LB to the output terminal VOUT.

Figure 7D shows the sequence of modes in which the converter may be controlled to operate. The sequence may be arranged as: mode 4, then mode 2, then mode 4, then mode 1, then mode 4, then mode 2, etc, etc. The graphic shows how current, for example I_{A}, or I_{B}, or I_{O}, may change over time, as the converter is controlled to transition from one mode to the next. During mode 4, the voltage across each of LA and LB is equal to VOUT-GND (i.e., VOUT), which results in a decreasing current. When it is determined that the measured current (eg, I_{A}, or I_{B}, or I_{O}) is below the target amount I_{T} by more than a pre-determined margin (for example, 1%, 2%, 5%, 10%, etc), the converter may be controlled to move to the next mode in the sequence, which in this example is shown as mode 2. During mode 2, the capacitor CA is being charged by I_{B} and capacitor CB is being charged by I_{A}. The voltage across each of LA and LB is equal to VIN/2-VOUT, which results in an increasing current, because Vout/Vin<0.5. When it is determined that the measured current is above the target amount I_{T} by more than a pre-determined margin (for example, 1%, 2%, 5%, 10%, etc), the converter may be controlled to return to mode 4. After the sequence mode 4 - mode 2 - mode 4, the converter may be controlled to operate in mode 1. During mode 1, the capacitor CA discharges I_{A} and capacitor CB discharges I_{B}. Thus, it can be seen that mode 1results in CA discharging one current (eg I_{A}) and CB discharging the other current (eg I_{B}) and mode 2 results in CB being charged by one current (eg I_{A}) and CA being charged by the other current (eg I_{B}), thereby achieving self-balancing of the currents and of the capacitor voltages, even when the inductive impedances LA and LB are not balanced. During mode 1, the voltage across each of LA and LB is equal to VIN/2- VOUT, which results in an increasing current, because Vout/Vin<0.5. When it is determined that the measured current is above the target amount I_{T} by more than a pre-determined margin (for example, 1%, 2%, 5%, 10%, etc), the converter may be controlled to return to mode 4. Thus, it can be seen that the current can be controlled to a desired level, with an amount of ripple about that desired level.

Since I_{A} and I_{B} are self-balanced, this control may be achieved by measuring only one of I_{A}, I_{B} or I_{O}. Thus, the burden of current measurement, and complexity of control, may be reduced compared with prior art two-phase, three level converters. The measure of current used may be any one or more of instantaneous current, average current (eg, RMS or mean current), peak/maximum current, or trough/minimum current, etc. Any suitable current measurement means, such as a shunt and ADC, may be used and is not represented in the figures for the sake of simplicity.

Optionally, the voltage across one or more of CA and CB may also be monitored and may be used to determine the required mode sequence. For example, if the monitored capacitor voltage is deemed to be too high (for example, it is greater than VIN/2), the converter may be controlled to alternate between mode 4 and mode 1, until the capacitor has discharged sufficiently to reduce the capacitor voltage to VIN/2 or less, at which point it may return to the sequence of mode 4 - mode 2 - mode 4 - mode 1 - mode 4 - mode 2 - mode 4 - mode 1 - mode 4, etc. Likewise, if the monitored capacitor voltage is deemed to be too low (for example, it is much less than VIN/2), the converter may be controlled to alternate between mode 4 and mode 2, until the capacitor has charged sufficiently to increase the capacitor voltage to close to VIN/2, at which point it may return to the sequence of mode 4 - mode 2 - mode 4 - mode 1 - mode 4 - mode 2 - mode 4 - mode 1 - mode 4, etc. In one example, the next mode to go to at the end of mode 4 may be determined by comparing the capacitor voltage to VIN/2. If it is greater than VIN/2, the next mode may be mode 1, and if it is less than VIN/2, the next mode may be mode 2. Again, because of self-balancing, monitoring the voltage on a single capacitor should be sufficient to achieve this control. The capacitor voltage may be measured using any suitable means and is not represented in the figures for the sake of simplicity.

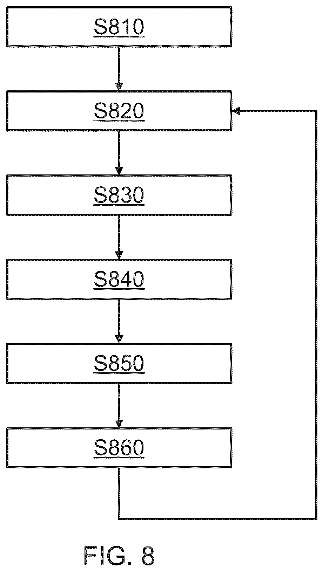

Figure 8 shows a representation of an example method of controlling the DC-DC power converter 400, which may be performed, for example, by the controller 410.

In Step S810, a plurality of modes of operation is determined based on the relative size of Vin and Vout (for example, whether Vout/Vin is greater than 0.5 or less than 0.5).

In Step S820, the DC-DC power converter 400 is put into a mode of operation of the determined plurality of modes of operation, such as mode 3 described above if Vout/Vin>0.5, or mode 4 described above if Vout/Vin<0.5.

In Step S830, it is determined, based on a measured current (such as IA, IB or IO), that the next mode of operation is required, for example because the measured current is above or below a target amount I_{T} by more than an allowed tolerance. In some implementations. the method may proceed to Step S840, for example when there is flexibility regarding the sequence of modes of operation. In other implementations, Step S840 may be omitted, for example where the plurality of modes determined in Step S810 has a fixed sequence, such as mode 3 - mode 2 - mode 3 - mode 1 - mode 3 - mode 2, etc.

In Step S840, it is determined, based on at least one measured capacitor voltage, which of the plurality of modes the DC-DC power converter 400 should be operated in next. For example, it may be mode 1 or mode 2 described above, depending on the measured capacitor voltage(s), such as depending on a comparison of the measured voltage(s) and VIN/2.

In Step S850, the DC-DC power converter 400 is put into the next mode of operation of the determined plurality of modes of operation, for example mode 1 or mode 2 described above.

In Step S860, it is determined, based on a measured current (such as IA, IB or IO), that the next mode of operation is required. The method then returns to Step S820.

The skilled person will readily appreciate that various alterations or modifications may be made to the above described aspects of the disclosure without departing from the scope of the disclosure.

For example, each of the switches of the DC-DC converter 400 are represented in Figures 4-7 as n-type FETs. However, any suitable type of controllable switch may alternatively be used, for example any suitable type of p-type or n-type transistor may be used, such as FETs, bipolar transistors, etc. The diodes represented in Figures 4-7 are body diodes of the FETs and are not separate components, although optionally separate diodes may be coupled across each of the switches if desired.

In some instances, the output current I_{O} could actually be supplied to the terminal marked in Figures 4-7 as "VIN". For example, a battery may be coupled to the terminal marked "VOUT", which may at times be charged by a current flowing from the terminal marked "VIN" to the terminal marked "VOUT", via the DC-DC converter.. However, at other times, a battery coupled to the terminal marked "VOUT" may supply current to the terminal marked "VIN", via the DC-DC converter.. In such a situation, the terminal marked "VIN" may effectively operate as the output power terminal (since current is supplied to it by the DC-DC converter) and may be referred to as the "output terminal", or "DC power output terminal" or a "first terminal of the DC-DC converter", and the terminal marked "VOUT" may effectively operate as the input power terminal (since current is supplied from it to the DC-DC converter) and may be referred to as the "input terminal", or "DC power input terminal", or a "second terminal of the DC-DC converter". In this case, VIN will still be a higher voltage than VOUT, but VIN is a boosted output (i.e., the DC-DC converter operates to boost, instead of buck). Consequently, VIN may be referred to as a relatively high voltage terminal and VOUT may be referred to as a relatively low voltage terminal, since VIN>VOUT. The current flows and modes of operation when current is supplied to VIN by the DC-DC converter will still be very similar to those described above, but the average inductor currents will be in the opposite direction.

As a result, the terminal labelled "VIN" may generically be referred to as a first terminal of the DC-DC converter and the terminal labelled "VOUT" may generically be referred to as a second terminal of the DC-DC converter. In some situations, I_{O} may be supplied to the second terminal (as is the case in the examples of Figures 4-7), in which case the first terminal (VIN) may be called an input voltage terminal, or an input terminal, and the second terminal (VOUT) may be called an output voltage terminal, or an output terminal. In other situations, I_{O} may be supplied to the first terminal (VIN), in which case the first terminal (VIN) may be called an output voltage terminal, or an output terminal, and the second terminal (VOUT) may be called an input voltage terminal, or an input terminal. In either case, the converter circuit can be operated to supply a controlled amount of power at whichever terminal I_{O} is supplied to.

The functionality of the controller 410 may be implemented in any suitable way, for example as functionality within a microcontroller, or as software that is executed by a processor such as a microprocessor, or in an FPGA, or as a dedicated hardware circuit, etc.

The capacitor C_{OUT} is an optional smoothing capacitor, which may be omitted if not required for the particular implementation of the circuit.

The terminology "coupled" used above encompasses both a direct electrical connection between two components, and an indirect electrical connection where the two components are electrically connected to each other via one or more intermediate components.

### Aspects of the disclosure

Non-limiting aspects of the disclosure are set out in the following numbered clauses.

### First set of aspects

1. A DC-DC power converter comprising: a first converter circuit for controlling a first current I_{A}, the first converter circuit comprising: a first plurality of switches (S1AS4A) coupled to a first terminal of the DC-DC power converter; and a first inductive impedance (LA) through which the first current (I_{A}) flows, wherein the first inductive impedance (LA) comprises a first end coupled to the first plurality of switches (S1AS4A) and a second end coupled to a second terminal (VOUT) of the DC-DC power converter; a second converter circuit for controlling a second current (I_{B}), the second converter circuit comprising: a second plurality of switches (S1B-S4B) coupled to the first terminal of the DC-DC power converter; and a first inductive impedance (LB) comprising a first end coupled to the first plurality of switches (S1B-S4B) and a second end coupled to the second terminal (VOUT); a first capacitor (CA) comprising a first terminal coupled to the first converter circuit and a second terminal coupled to the second converter circuit; and a second capacitor (CB) comprising a first terminal coupled to the second converter circuit and a second terminal coupled to the first converter circuit.
2. The DC-DC power converter of clause 1, wherein the first terminal is an input voltage terminal (VIN) of the DC-DC power converter, and the second terminal is an output voltage terminal (VOUT) of the DC-DC power converter.
3. The DC-DC power converter of any preceding clause, configured to be operable in a plurality of different modes by controlling the first plurality of switches (S1A-S4A) and the second plurality of switches (S1B-S4B), wherein the plurality of different modes comprises: a first mode wherein the first current flows (I_{A}) through the first inductive impedance (LA) and the first capacitor (CA), and the second current (I_{B}) flows through the second inductive impedance (LB) and the second capacitor (CB); and a second mode wherein the first current (I_{A}) flows through the first inductive (LA) impedance and the second capacitor (CB), and the second current (I_{B}) flows through the second inductive impedance (LB) and the first capacitor (CA).
4. The DC-DC power converter of clause 3, wherein during the first mode the first capacitor (CA) is discharged and the second capacitor (CB) is discharged, and wherein during the second mode the first capacitor (CA) is charged and the second capacitor (CB) is charged.
5. The DC-DC power converter of clause 3 or clause 4, wherein the first converter and the second converter are each coupled a reference terminal (GND).
6. The DC-DC power converter of clause 5, wherein in the first mode the first plurality of switches (S1A-S4A) and the second plurality of switches (S1B-S4B) are controlled to couple the first end of the first inductive impedance (LA) to the reference terminal (GND) via the first capacitor (CA), and to couple the first end of the second inductive impedance (LB) to the reference terminal (GND) via the second capacitor (CB).
7. The DC-DC power converter of clause 5 or clause 6, wherein in the second mode the first plurality of switches (S1A-S4A) and the second plurality of switches (S1B-S4B) are controlled to couple the first end of the first inductive impedance (LA) to the first terminal of the DC-DC power converter, via the second capacitor (CB), and to couple the first end of the second inductor (LB) to the first terminal of the DC-DC power converter, via the first capacitor (CA).
8. The DC-DC power converter of any of clauses 3 to 7, wherein the plurality of different modes further comprises: a third mode wherein: the first current (I_{A}) flows between the first terminal and the second terminal, through the first inductive impedance (LA), and the second current (I_{B}) flows between the first terminal and the second terminal, through the second inductive impedance (LB).
9. The DC-DC power converter of any of clauses 3 to 8, wherein the plurality of different modes further comprises: a fourth mode wherein: the first current (I_{A}) flows between the second terminal and a reference terminal (GND), through the first inductive impedance (LA), and the second current (I_{B}) flows between the second terminal (VOUT) and the reference terminal (GND), through the second inductive impedance (LB).
10. The DC-DC power converter of clause 5 or clause 9, wherein the reference terminal (GND) is held at a ground voltage.
11. The DC-DC power converter of any of clauses 2 to 10, further comprising: a controller (410) coupled to the first converter circuit and the second converter circuit, wherein the controller (410) is configured to: control the first plurality of switches (S1A-S4A) and the second plurality of switches (S1B-S4B) so that operate the DC-DC power converter in a sequence of modes comprising at least two of the plurality of modes.
12. The DC-DC power converter of clause 11, wherein the sequence of modes is determined based at least on a first voltage at the first terminal of the DC-DC power converter and a second voltage at the second terminal of the DC-DC power converter.
13. The DC-DC power converter of clause 12, wherein the first voltage is an input voltage (VIN) and the second voltage is an output voltage (VOUT).
14. The DC-DC power converter of clause 13, wherein when the input voltage (VIN) is more than twice the size of the output voltage (VOUT), the sequence of modes comprises the first, second and fourth modes.
15. The DC-DC power converter of clause 14, wherein when the input voltage (VIN) is less than twice the size of the output voltage (VOUT), the sequence of modes comprises the first, second and third modes.
16. The DC-DC power converter of any of clauses 11 to 15, wherein the sequence of modes is further determined based at least on a voltage across the first capacitor and/or a voltage across the second capacitor.
17. The DC-DC power converter of clause 16, wherein the sequence of modes is set such that the voltage across the first capacitor and/or a voltage across the second capacitor is held at substantially half of the input voltage of the DC-DC power converter.
18. The DC-DC power converter of any of clauses 11 to 17, wherein the controller (410) is configured to control the first plurality of switches (S1A-S4A) and the second plurality of switches (S1B-S4B) based on a measure of current ,wherein the measure of current relates to at least one of: the first current (I_{A}); the second current (I_{B}) and/or an output current (I_{O}) of the DC-DC power converter.
19. The DC-DC power converter of clause 18, wherein the measure of current comprises any one or more of: an instantaneous current, an average current, a peak current, a trough current.
20. The DC-DC power converter of clause 18 or clause 19, wherein the controller (410) is configured to control the first plurality of switches (S1A-S4A) and the second plurality of switches (S1B-S4B) further based on a target current corresponding to the measure of current.
21. The DC-DC power converter of any preceding clause, wherein the DC-DC power converter is a three-level converter.
22. The DC-DC power converter of any preceding clause, wherein the first capacitor (CA) and second capacitor (CB) are coupled to the first converter circuit and the second converter circuit such that a voltage across each of the first plurality of switches and each of the second plurality of switches does not exceed approximately 50% of an input voltage at an input terminal of the DC-DC power converter.
23. The DC-DC power converter of any preceding clause, wherein the first terminal is an output voltage terminal (VOUT) of the DC-DC power converter, and the second terminal is an in voltage terminal (VIN) of the DC-DC power converter.

### Second set of aspects

1. A DC-DC power converter comprising: a first converter circuit for controlling a first current, the first converter circuit comprising: a first plurality of switches coupled to a first terminal of the DC-DC power converter; and a first inductive impedance through which the first current flows, wherein the first inductive impedance comprises a first end coupled to the first plurality of switches and a second end coupled to a second terminal of the DC-DC power converter; a second converter circuit for controlling a second current, the second converter circuit comprising: a second plurality of switches coupled to the first terminal of the DC-DC power converter; and a second inductive impedance comprising a first end coupled to the second plurality of switches and a second end coupled to the second terminal; a first capacitor comprising a first terminal coupled to the first converter circuit and a second terminal coupled to the second converter circuit; and a second capacitor comprising a first terminal coupled to the second converter circuit and a second terminal coupled to the first converter circuit.
2. The DC-DC power converter of clause 1, wherein the first terminal is an input terminal of the DC-DC power converter, and the second terminal is an output terminal of the DC-DC power converter (i.e., current flows from the first terminal to the second terminal, via the DC-DC power converter).
3. The DC-DC power converter of any preceding clause, wherein the DC-DC power converter is configured to be operable in a plurality of different modes by controlling the first plurality of switches and the second plurality of switches, wherein the plurality of different modes comprises: a first mode wherein the first current flows through the first inductive impedance and the first capacitor, and the second current flows through the second inductive impedance and the second capacitor; and a second mode wherein the first current flows through the first inductive impedance and the second capacitor, and the second current flows through the second inductive impedance and the first capacitor.
4. The DC-DC power converter of clause 3, wherein during the first mode, the first capacitor discharges and the second capacitor discharges, and wherein during the second mode, the first capacitor charges and the second capacitor charges.
5. The DC-DC power converter of clause 3 or clause 4, wherein the first converter circuit and the second converter circuit are each coupled a reference terminal.
6. The DC-DC power converter of clause 5, wherein in the first mode, the first plurality of switches and the second plurality of switches are operable to couple the first end of the first inductive impedance to the reference terminal via the first capacitor, and to couple the first end of the second inductive impedance to the reference terminal via the second capacitor.
7. The DC-DC power converter of clause 5 or clause 6, wherein in the second mode the first plurality of switches and the second plurality of switches are operable to couple the first end of the first inductive impedance to the first terminal of the DC-DC power converter via the second capacitor, and to couple the first end of the second inductor to the first terminal of the DC-DC power converter via the first capacitor (CA).
8. The DC-DC power converter of any of clauses 3 to 7, wherein the plurality of different modes further comprises: a third mode wherein: the first current flows between the first terminal and the second terminal, through the first inductive impedance, and the second current flows between the first terminal and the second terminal, through the second inductive impedance.
9. The DC-DC power converter of any of clauses 3 to 8, wherein the plurality of different modes further comprises: a fourth mode wherein: the first current flows between the second terminal and a reference terminal, through the first inductive impedance, and the second current flows between the second terminal and the reference terminal, through the second inductive impedance.
10. The DC-DC power converter of clause 5 or clause 9, wherein the reference terminal is held at a ground voltage.
11. The DC-DC power converter of any of clauses 3 to 10, further comprising: a controller coupled to the first converter circuit and the second converter circuit, wherein the controller is configured to: control the first plurality of switches and the second plurality of switches so as to operate the DC-DC power converter in a sequence of modes comprising at least two of the plurality of modes.
12. The DC-DC power converter of clause 11, wherein the controller is configured to determine the sequence of modes based at least on a first voltage at the first terminal of the DC-DC power converter and a second voltage at the second terminal of the DC-DC power converter.
13. The DC-DC power converter of clause 12, wherein the first terminal is an input terminal and the second terminal is an output terminal.
14. The DC-DC power converter of clause 13, wherein when the first voltage is more than twice the size of the second voltage, the sequence of modes comprises the first, second and fourth modes.
15. The DC-DC power converter of clause 13 or clause 14, wherein when the first voltage is less than twice the size of the second voltage, the sequence of modes comprises the first, second and third modes.
16. The DC-DC power converter of any of claims 11 to 15, wherein the controller is configured to determine the sequence of modes based on any one or more of: a voltage across the first capacitor; and a voltage across the second capacitor.
17. The DC-DC power converter of clauses 16, wherein the sequence of modes is determined such that the voltage across the first capacitor and the voltage across the second capacitor is held at substantially half of the first voltage of the DC-DC power converter.
18. The DC-DC power converter of any of clauses 11 to 17, wherein the controller is configured to control the first plurality of switches and the second plurality of switches based on a measure of current ,wherein the measure of current relates to any one or more of: the first current; the second current; and an output current of the DC-DC power converter.
19. The DC-DC power converter of clause 18, wherein the measure of current comprises any one or more of: an instantaneous current, an average current, a peak current, a trough current.
20. The DC-DC power converter of clause 18 or clause 19, wherein the controller is configured to control the first plurality of switches and the second plurality of switches further based on a target current corresponding to the measure of current.
21. The DC-DC power converter of any preceding clause, wherein the DC-DC power converter is a three-level converter.
22. The DC-DC power converter of any preceding clause, wherein the first capacitor and second capacitor are coupled to the first converter circuit and the second converter circuit such that a voltage across each of the first plurality of switches and each of the second plurality of switches does not exceed approximately 50% of a first voltage at the first terminal of the DC-DC power converter.
23. The DC-DC power converter of any preceding clause, wherein the first terminal is an output terminal of the DC-DC power converter, and the second terminal is an in input terminal of the DC-DC power converter (i.e., current flows from the second terminal to the first terminal, via the DC-DC power converter).
24. A method of controlling a DC-DC power converter, the method comprising: controlling an output power of the DC-DC power converter by controlling a first plurality of switches and a second plurality of switches of the DC-DC power converter so as to sequentially operate in a plurality of different modes, wherein the plurality of different modes comprises: a first mode wherein a first current flows between a reference terminal of the DC-DC power converter and an output terminal of the DC-DC power converter, through a first inductive impedance and a first capacitor of the DC-DC power converter, and a second current flows between the reference terminal and the output terminal, through a second inductive impedance and a second capacitor; and a second mode wherein the first current flows between an input terminal of the DC-DC power converter and the output terminal, through the first inductive impedance and the second capacitor, and the second current flows between the input terminal and the output terminal, through the second inductive impedance and the first capacitor, wherein an output current of the DC-DC power converter comprises the first current and the second current.
25. The method of clause 24, wherein during the first mode, the first capacitor discharges and the second capacitor discharges, and wherein during the second mode, the first capacitor charges and the second capacitor charges.
26. The method of clause 24 or clause 25, wherein the plurality of different modes further comprises: a third mode wherein: the first current flows between the input terminal and the output terminal, through the first inductive impedance, and the second current flows between the input terminal and the output terminal, through the second inductive impedance.
27. The method of any of clauses 24 to 26, wherein the plurality of different modes further comprises: a fourth mode wherein: the first current flows between the reference terminal and output terminal, through the first inductive impedance, and the second current flows between the second terminal and the reference terminal, through the second inductive impedance.
28. The method of any of clauses 24 to 27, further comprising: determining the sequence of modes based at least on a first voltage at the input terminal and a second voltage at the output terminal.
29. The method of any of clauses 24 to 28, wherein when the first voltage is more than twice the size of the second voltage, the sequence of modes comprises the first, second and fourth modes.
30. The method of any of clauses 24 to 29, wherein when the first voltage is less than twice the size of the second voltage, the sequence of modes comprises the first, second and third modes.
31. The method of any of clauses 24 to 30, further comprising: determining the sequence of modes based on any one or more of: a voltage across the first capacitor; and a voltage across the second capacitor.
32. The method of clause 31, wherein the sequence of modes is determined such that the voltage across the first capacitor and the voltage across the second capacitor is held at substantially half of the input voltage of the DC-DC power converter.
33. The method of any of clauses 24 to 32, wherein control of the first plurality of switches and the second plurality of switches is based on a measure of current ,wherein the measure of current relates to any one or more of: the first current; the second current; and the output current.
34. The method of clause 33, wherein control of the first plurality of switches and the second plurality of switches is further based on a target current corresponding to the measure of current.
35. A circuit comprising: a first converter circuit coupled to a DC power input terminal and a DC power output terminal, wherein the first converter circuit is for controlling a first current output at the DC power output terminal; a second converter circuit coupled to the DC power input terminal and the DC power output terminal, wherein the second converter circuit is for controlling a second current output at the DC power output terminal; a first capacitor cross coupled between the first converter circuit and the second converter circuit; and a second capacitor cross coupled between the first converter circuit and the second converter circuit.
36. The circuit of clause 35, wherein the first capacitor and the second capacitor are cross coupled between the first converter circuit and the second converter circuit such that the first current and the second current self-balance, and a voltage across the first capacitor and a voltage across the second capacitor self-balance.
37. The circuit of clause 35 or clause 36, wherein the circuit is operable in a plurality of sequential modes in order to control an output current at the DC power output terminal, and wherein the circuit is configured such that in a first mode of the plurality of different modes, the first current flows through the first capacitor to the DC power output terminal and the first capacitor discharges, and the second current flows through the second capacitor to the DC power output terminal and the second capacitor discharges, and wherein the circuit is configured such that in a second mode of the plurality of different modes, the first current flows through the second capacitor to the DC power output terminal and the second capacitor charges, and the second current flows through the first capacitor to the DC power output terminal and the first capacitor charges.
38. The circuit of any of clauses 35 to 37 , wherein the first converter circuit comprises: a first plurality of switches coupled to the DC power input terminal; and a first inductive impedance coupled to the first plurality of switches and the DC power output terminal, and wherein the second converter circuit comprises: a second plurality of switches coupled to the DC power input terminal; and a second inductive impedance coupled to the second plurality of switches and the DC power output terminal.

## Claims

1. A DC-DC power converter comprising:
a first converter circuit for controlling a first current, the first converter circuit comprising:
a first plurality of switches coupled to a first terminal of the DC-DC power converter; and
a first inductive impedance through which the first current flows, wherein the first inductive impedance comprises a first end coupled to the first plurality of switches and a second end coupled to a second terminal of the DC-DC power converter;
a second converter circuit for controlling a second current, the second converter circuit comprising:
a second plurality of switches coupled to the first terminal of the DC-DC power converter; and
a second inductive impedance comprising a first end coupled to the second plurality of switches and a second end coupled to the second terminal;
a first capacitor comprising a first terminal coupled to the first converter circuit and a second terminal coupled to the second converter circuit; and
a second capacitor comprising a first terminal coupled to the second converter circuit and a second terminal coupled to the first converter circuit.

2. The DC-DC power converter of claim 1, wherein the first terminal is an input terminal of the DC-DC power converter, and the second terminal is an output terminal of the DC-DC power converter.

3. The DC-DC power converter of any preceding claim, wherein the DC-DC power converter is configured to be operable in a plurality of different modes by controlling the first plurality of switches and the second plurality of switches, wherein the plurality of different modes comprises:
a first mode wherein the first current flows through the first inductive impedance and the first capacitor, and the second current flows through the second inductive impedance and the second capacitor; and
a second mode wherein the first current flows through the first inductive impedance and the second capacitor, and the second current flows through the second inductive impedance and the first capacitor.

4. The DC-DC power converter of claim 3, wherein during the first mode, the first capacitor discharges and the second capacitor discharges, and
wherein during the second mode, the first capacitor charges and the second capacitor charges.

5. The DC-DC power converter of claim 3 or claim 4, wherein the first converter circuit and the second converter circuit are each coupled a reference terminal.

6. The DC-DC power converter of claim 5, wherein at least one of the following applies:
(a) in the first mode, the first plurality of switches and the second plurality of switches are operable to couple the first end of the first inductive impedance to the reference terminal via the first capacitor, and to couple the first end of the second inductive impedance to the reference terminal via the second capacitor;
(b) in the second mode the first plurality of switches and the second plurality of switches are operable to couple the first end of the first inductive impedance to the first terminal of the DC-DC power converter via the second capacitor, and to couple the first end of the second inductor to the first terminal of the DC-DC power converter via the first capacitor (CA).

7. The DC-DC power converter of any of claims 3 to 6, wherein the plurality of different modes further comprises:
a third mode wherein:
the first current flows between the first terminal and the second terminal, through the first inductive impedance, and
the second current flows between the first terminal and the second terminal, through the second inductive impedance.

8. The DC-DC power converter of any of claims 3 to 7, wherein the plurality of different modes further comprises:
a fourth mode wherein:
the first current flows between the second terminal and a reference terminal, through the first inductive impedance, and
the second current flows between the second terminal and the reference terminal, through the second inductive impedance.

9. The DC-DC power converter of any of claims 3 to 8, further comprising:
a controller coupled to the first converter circuit and the second converter circuit,
wherein the controller is configured to:
control the first plurality of switches and the second plurality of switches so as to operate the DC-DC power converter in a sequence of modes comprising at least two of the plurality of modes.

10. The DC-DC power converter of claim 9, wherein the controller is configured to determine the sequence of modes based at least on a first voltage at the first terminal of the DC-DC power converter and a second voltage at the second terminal of the DC-DC power converter.

11. The DC-DC power converter of claim 10, wherein at least one of the following applies:
(a) when the first voltage is more than twice the size of the second voltage, the sequence of modes comprises the first, second and fourth modes;
(b) when the first voltage is less than twice the size of the second voltage, the sequence of modes comprises the first, second and third modes.

12. The DC-DC power converter of any of claims 9 to 11, wherein the controller is configured to determine the sequence of modes based on any one or more of: a voltage across the first capacitor; and a voltage across the second capacitor,
and optionally wherein the sequence of modes is determined such that the voltage across the first capacitor and the voltage across the second capacitor is held at substantially half of a voltage at the first terminal of the DC-DC power converter.

13. The DC-DC power converter of any of claims 9 to 12, wherein the controller is configured to control the first plurality of switches and the second plurality of switches based on a measure of current ,wherein the measure of current relates to any one or more of: the first current; the second current; and an output current of the DC-DC power converter.

14. The DC-DC power converter of any preceding claim, wherein the first capacitor and second capacitor are coupled to the first converter circuit and the second converter circuit such that a voltage across each of the first plurality of switches and each of the second plurality of switches does not exceed approximately 50% of a voltage at the first terminal of the DC-DC power converter.

15. A method of controlling a DC-DC power converter, the method comprising:
controlling an output power of the DC-DC power converter by controlling a first plurality of switches and a second plurality of switches of the DC-DC power converter so as to sequentially operate in a plurality of different modes,
wherein the plurality of different modes comprises:
a first mode wherein a first current flows between a reference terminal of the DC-DC power converter and an output terminal of the DC-DC power converter, through a first inductive impedance and a first capacitor of the DC-DC power converter, and a second current flows between the reference terminal and the output terminal, through a second inductive impedance and a second capacitor; and
a second mode wherein the first current flows between an input terminal of the DC-DC power converter and the output terminal, through the first inductive impedance and the second capacitor, and the second current flows between the input terminal and the output terminal, through the second inductive impedance and the first capacitor,
wherein an output current of the DC-DC power converter comprises the first current and the second current.
